# EUROPEAN PATENT APPLICATION

(11) **EP 4 228 373 A1**
(43) Date of publication of application: **16.08.2023**
(21) Application number: 21896903.8
(22) Date of filing: 22.11.2021
(51) Int. Cl.: H04W 76/25

(54) **COMMUNICATION INDICATION METHOD AND APPARATUS, AND NETWORK SIDE DEVICE**

(30) Priority: 25.11.2020 CN 202011346883
(71) Applicant: Vivo Mobile Communication Co., Ltd., Dongguan, Guangdong 523863 (CN)
(72) Inventor: XIE, Zhenhua, Dongguan, Guangdong 523863 (CN); KE, Xiaowan, Dongguan, Guangdong 523863 (CN); WANG, Wen, Dongguan, Guangdong 523863 (CN)
(74) Representative: Murgitroyd & Company
(86) International application number: PCT/CN2021/132044
(87) International publication number: WO 2022/111402

(57) **Abstract**

This application discloses a communication indication method and apparatus, and a network side device, and belongs to the field of wireless communications technologies. The method includes: transmitting, by a first core network function based on a multicast service status corresponding to a user terminal, first assistance information to an access network device serving the user terminal, where the first assistance information is used for the access network device to control a radio resource control RRC state of the user terminal.

## Description

### CROSS-REFERENCE TO RELATED APPLICATION

The present invention claims priority to Chinese Patent Application No. 202011346883.3, filed with the China National Intellectual Property Administration on November 25, 2020 and entitled "COMMUNICATION INDICATION METHOD AND APPARATUS, AND NETWORK SIDE DEVICE", which is incorporated herein by reference in its entirety.

### TECHNICAL FIELD

This application belongs to the field of wireless communications technologies, and specifically, to a communication indication method and apparatus, and a network side device.

### BACKGROUND

In a related technology, in a case that a user does not have unicast service data, a base station releases a radio resource control (Radio Resource Control, RRC) connection according to an indication by a core network, so that user equipment (User Equipment, UE, namely, a terminal) enters an RRC-idle (IDLE) or RRC-inactive state (INACTIVE state). In this case, if high-reliability multicast service data needs to be transmitted, the terminal cannot perform a handover operation, and therefore cannot maintain continuity of the multicast service data, reducing reliability of a multicast service.

### SUMMARY

Embodiments of this application provide a communication indication method and apparatus, and a network side device, to resolve a problem that continuity and reliability of multicast service data cannot be ensured in a case that no unicast service data is available.

According to a first aspect, a communication indication method is provided and is performed by a first core network function. The method includes: transmitting, based on a multicast service status corresponding to a user terminal, first assistance information to an access network device serving the user terminal, where the first assistance information is used for the access network device to control a radio resource control RRC state of the user terminal.

According to a second aspect, a communication indication method is provided and is performed by an access network device. The method includes: in a case that no data is received and/or transmitted through a connection specific to a user terminal, determining a radio resource control RRC state of the user terminal based on at least one of the following: that the user terminal participates in a multicast service; a multicast service in which the user terminal participates; that data is received and/or transmitted for a multicast service in which the user terminal participates; that no data is received and/or transmitted for a multicast service in which the user terminal participates; and first assistance information transmitted by a first core network function, where the first assistance information is used for the access network device to control the RRC state of the user terminal.

According to a third aspect, a communication indication apparatus is provided. The apparatus includes: a first transmitting module, configured to transmit, based on a multicast service status corresponding to a user terminal, first assistance information to an access network device serving the user terminal, where the first assistance information is used for the access network device to control a radio resource control RRC state of the user terminal.

According to a fourth aspect, a communication indication apparatus is provided. The apparatus includes: a determining module, configured to: in a case that no data is received and/or transmitted through a connection specific to a user terminal, determine a radio resource control RRC state of the user terminal based on at least one of the following: that the user terminal participates in a multicast service; a multicast service in which the user terminal participates; that data is received and/or transmitted for a multicast service in which the user terminal participates; that no data is received and/or transmitted for a multicast service in which the user terminal participates; and first assistance information transmitted by a first core network function, where the first assistance information is used for an access network device to control the RRC state of the user terminal.

According to a fifth aspect, a network side device is provided, where the network side device includes a processor, a memory, and a program or instructions stored in the memory and executable on the processor, and when the program or instructions are executed by the processor, steps of the method according to the first aspect are implemented, or steps of the method according to the second aspect are implemented.

According to a sixth aspect, a readable storage medium is provided, where the readable storage medium stores a program or instructions, and when the program or instructions are executed by a processor, steps of the method according to the first aspect are implemented, or steps of the method according to the second aspect are implemented.

According to a seventh aspect, a chip is provided, where the chip includes a processor and a communication interface, the communication interface is coupled to the processor, and the processor is configured to execute a program or instructions for a network side device, to implement the method according to the first aspect, or implement the method according to the second aspect.

According to an eighth aspect, a computer program product is provided, where the computer program product is stored in a non-transitory storage medium, and when the computer program product is executed by a processor, steps of the method according to the first aspect are implemented, or the method according to the second aspect is implemented.

In the embodiments of this application, the first core network function transmits, based on the multicast service status corresponding to the user terminal, the first assistance information to the access network device serving the user terminal, where the first assistance information is used for the access network device to control the radio resource control RRC state of the user terminal. This can resolve a problem that continuity of multicast service data cannot be ensured in a case that no unicast service data is available, thereby ensuring reliability of a multicast service and improving quality of wireless communication.

### BRIEF DESCRIPTION OF THE DRAWINGS

FIG. 1 is a schematic diagram of a wireless communications system according to an example embodiment of this application;
FIG. 2 is a flowchart of a communication indication method according to an example embodiment of this application;
FIG. 3 is a flowchart of a communication indication method according to another example embodiment of this application;
FIG. 4 is an interaction flowchart of a communication indication method according to an example embodiment of this application;
FIG. 5 is a flowchart of a communication indication method according to still another example embodiment of this application;
FIG. 6 is a flowchart of a communication indication method according to still another example embodiment of this application;
FIG. 7a is a block diagram of a communication indication apparatus according to an example embodiment of this application;
FIG. 7b is a block diagram of a communication indication apparatus according to another example embodiment of this application;
FIG. 8a is a block diagram of a communication indication apparatus according to another example embodiment of this application;
FIG. 8b is a block diagram of a communication indication apparatus according to another example embodiment of this application; and
FIG. 9 is a block diagram of a network side device according to an example embodiment of this application.

### DETAILED DESCRIPTION

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to applications other than an NR system application, for example, a 6th generation (6th Generation, 6G) communications system.

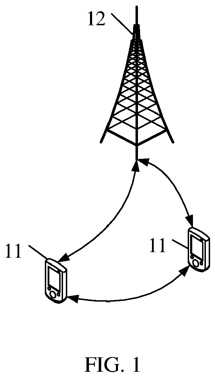

FIG. 1 is a block diagram of a wireless communications system to which an embodiment of this application is applicable. The wireless communications system includes a terminal 11 and a network side device 12. The terminal 11 may also be referred to as a terminal device or a user terminal. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a band, a headset, glasses, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

The following describes in detail the technical solutions provided in the embodiments of this application with reference to the accompanying drawings and by using specific embodiments and application scenarios thereof.

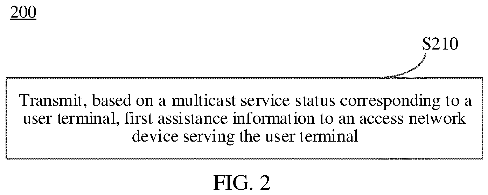

FIG. 2 is a schematic diagram of a communication indication method 200 according to an example embodiment of this application. The method 200 may be performed by a first core network function, the first core network function may include but is not limited to at least one of an access and mobility management function (Access and Mobility Management Function, AMF), a session management function (Session Management Function, SMF), an MB-SMF, a user plane function (User Plane Function, UPF), a multicast broadcast (Multi-cast Broadcast, MB)-UPF, and the like. The SMF and UPF are configured to process a unicast service, and the MB-SMF and the MB-UPF are configured to process a multicast service. In this embodiment, the SMF and the MB-SMF may be disposed together or separately. Correspondingly, the UPF and the MB-UPF may also be disposed together or separately. This is not limited herein.

Still as shown in FIG. 2, the method 200 includes at least the following steps:
S210: Transmit, based on a multicast service status corresponding to a user terminal, first assistance information to an access network device serving the user terminal.

A manner of obtaining the multicast service status may be set according to an actual requirement. For example, the multicast service status may be obtained by the first core network function by monitoring a multicast service state of the user terminal, or may be transmitted by another network side device to the first core network function. There is not limited in this embodiment.

The first assistance information is used for the access network device to control an RRC state of the user terminal. For example, the first assistance information may be used for indicating the access network device to control the RRC state of the user terminal. For another example, the first assistance information may alternatively be used for assisting determination of the RRC state of the user terminal by the access network device.

The access network device may be a base station (gNB) configured to serve the user terminal, or the like. In this embodiment, the access network device may control the RRC state of the user terminal, for example, remaining in or not remaining in an RRC-CONNECTED state, based on the first assistance information transmitted by the first core network function. Therefore, in a case that no unicast service is available, the user terminal can still perform a handover operation normally, thereby ensuring continuity and reliability of a multicast service and improving quality of wireless communication.

It should be noted that the foregoing multicast service may be provided through a shared channel not specific to the user terminal, where the shared channel not specific to the user terminal is a data transmission channel that is established between a core network and a base station and that can be shared by a plurality of user terminals.

In this embodiment, the first core network function transmits, based on the multicast service status corresponding to the user terminal, the first assistance information to the access network device serving the user terminal, where the first assistance information is used for the access network device to control the radio resource control RRC state of the user terminal. This can resolve a problem that continuity of multicast service data cannot be ensured in a case that no unicast service data is available, thereby ensuring reliability of the multicast service and improving quality of wireless communication.

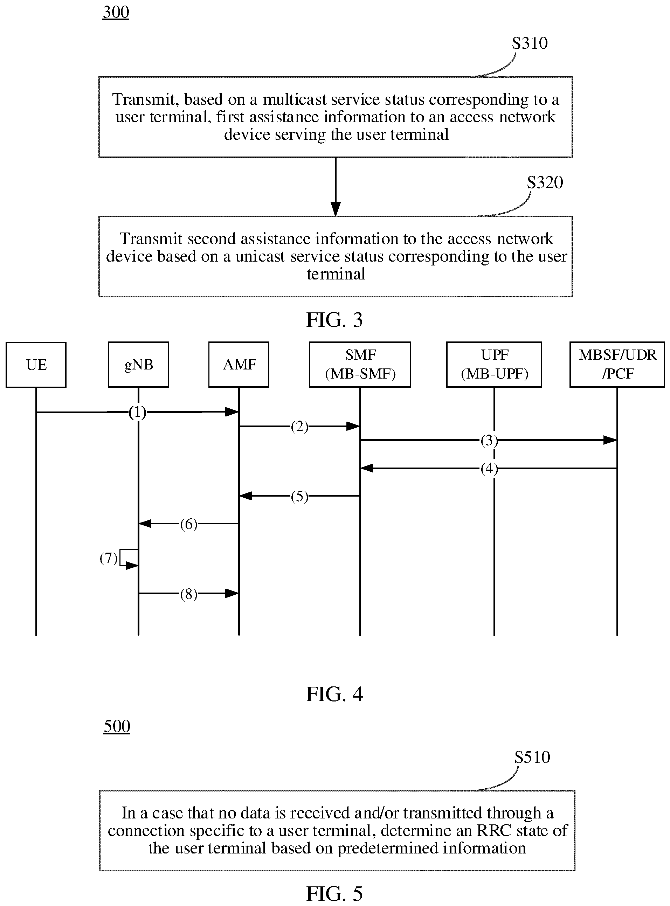

FIG. 3 is a schematic diagram of a communication indication method 300 according to an example embodiment of this application. The method is performed by a first core network function. The first core network function may be but is not limited to at least one of an AMF, an SMF, an MB-SMF, a UPF, an MB-UPF, and the like. The SMF and the UPF are configured to process a unicast service, and the MB-SMF and the MB-UPF are configured to process a multicast service. In this embodiment, the SMF and the MB-SMF may be disposed together or separately. Correspondingly, the UPF and the MB-UPF may also be disposed together or separately. This is not limited herein.

Still as shown in FIG. 3, the method 300 includes at least the following steps:
S310: Transmit, based on a multicast service status corresponding to a user terminal, first assistance information to an access network device serving the user terminal.

For an implementation process of S310, refer to the detailed descriptions in S210. In this embodiment, in a possible implementation, the multicast service status may include at least one of the following (1) to (4):
(1) a service requirement of a multicast service in which the user terminal participates, for example, the number, types, and names of multicast services in which the user terminal participates;
(2) that the user terminal participates in a multicast service, for example, whether the user terminal participates in a multicast service, where in a case that the user terminal participates in a multicast service, the first assistance information is transmitted to the access network device;
(3) a service requirement of a multicast service in which the user terminal participates, where the service requirement information may include one of the following (a) to (e):
   (a) service continuity;
   (b) service continuity and packet loss being not allowed;
   (c) service continuity and packet loss being allowed;
   (d) packet loss being not allowed; and
   (e) packet loss being allowed; and
(4) a quality of service (Quality of Service, QoS) requirement of a multicast service in which the user terminal participates.

In this case, in a possible implementation, the multicast service status may be autonomously obtained by the first core network function, or may be transmitted by a second core network function to the first core network function. For example, before S310, the first core network function may receive service requirement information and/or QoS requirement information transmitted by the second core network function, where the service requirement information and/or the QoS requirement information correspond to the multicast service.

The second core network function may be a core network function serving the user terminal, for example, an MBSF, a unified data repository (Unified Data Repository, UDR), or a policy control function (Policy Control Function, PCF) entity; or may be at least one of core network functions, such as an AMF, an SMF, an MB-SMF, a UPF, and an MB-UPF, that serve another terminal. This is not limited in this embodiment.

In another possible implementation, the first assistance information may include any one of the following (1) to (10):
(1) an RRC-CONNECTED state;
(2) an RRC-IDLE state;
(3) an RRC-INACTIVE state;
(4) remaining in an RRC-CONNECTED state, for example, the RRC-CONNECTED state is set as follows: required (required) to remain in the RRC-CONNECTED state, mandatory (mandatory) for remaining in the RRC-CONNECTED state, or always (always) remaining in the RRC-CONNECTED state;
(5) prohibiting entering an RRC-IDLE state, for example, the RRC-IDLE state is set as follows: no (no) entering the RRC-IDLE state, never (never) entering the RRC-IDLE state, or not allowed (not allowed) to enter the RRC-IDLE state;
(6) prohibiting entering an RRC-INACTIVE state, for example, the RRC-INACTIVE state is set as follows: no (no) entering the RRC-INACTIVE state, never (never) entering the RRC-INACTIVE state, or not allowed (not allowed) to enter the RRC-INACTIVE state;
(7) not remaining in an RRC-CONNECTED state, for example, the RRC-CONNECTED state is set as follows: selecting (option) to remain in the RRC-CONNECTED state, making the best effort (best effort) to remain in the RRC-CONNECTED state, or being allowed (allowed) to remain in the RRC-CONNECTED state;
(8) entering an RRC-IDLE state, for example, the RRC-IDLE state is set as follows: selecting (option) to enter the RRC-IDLE state, making the best effort (best effort) to enter the RRC-IDLE state, or being allowed (allowed) to enter the RRC-IDLE state;
(9) entering an RRC-INACTIVE state, for example, the RRC-INACTIVE state is set as follows: selecting (option) to enter the RRC-INACTIVE state, making the best effort (best effort) to enter the RRC-INACTIVE state, or being allowed (allowed) to enter the RRC-INACTIVE state; and
(10) selecting (option) a state corresponding to an RRC-CONNECTED state, for example, the RRC-CONNECTED state is set as follows: selecting (option) a state corresponding to an RRC-CONNECTED state, making the best effort (best effort) to enter an RRC-CONNECTED state, or being allowed (allowed) to enter an RRC-CONNECTED state.

In a possible implementation, the selecting a state corresponding to an RRC-CONNECTED state represents that the first core network function indicates that the RRC-CONNECTED state of the user terminal is to be determined by the access network device. For example, the access network device may determine, based on an actual communication requirement and communication status between the access network device and the user terminal, whether to remain in or not remain in the RRC-CONNECTED state.

In this embodiment, in a case that the access network device determines to remain in the RRC-CONNECTED state with the user terminal, the access network device may stop transmitting a connection release message to the user terminal, to ensure the RRC-CONNECTED state between the access network device and the user terminal.

In addition, in a case that the access network device determines to remain in the RRC-CONNECTED state with the user terminal, the access network device may further transmit indication information to the first core network function, where the indication information is used for indicating that the user terminal remains in the RRC-CONNECTED state or exits the RRC-CONNECTED state. This can ensure information synchronization between the access network device and the first core network function, and improve quality of wireless communication.

S320: Transmit second assistance information to the access network device based on a unicast service status corresponding to the user terminal.

The unicast service is provided through a connection specific to the user terminal. The connection includes a connection from a core network to a base station and a connection from the base station to a terminal, and is exclusive to the user terminal for data transmission. In an implementation, the unicast service status includes at least one of the following (1) and (2):
(1) a service requirement of the unicast service; and
(2) a QoS requirement of the unicast service.

Similar to the multicast service status, the unicast service status may be obtained by the first core network function, or may be transmitted by another core network function to the first core network function.

In this embodiment, while transmitting the first assistance information to the access network device based on the multicast service status, the first core network function may further transmit the second assistance information to the access network device based on the unicast service status. This can ensure both reliability of the multicast service and reliability of the unicast service, and improve quality of wireless communication.

Based on the foregoing descriptions of the communication indication method, as shown in FIG. 4, it is assumed that the first core network function includes an AMF, an SMF, an MB-SMF, a UPF, an MB-UPF, an MBSF, a UDR, and a PCF, the SMF and the MB-SMF are disposed together, the UPF and the MB-UPF are disposed together, and the access network device includes a gNB. In this case, an implementation process of the communication indication method may be as follows:
(1) The user terminal AMF requests to establish a PDU session (including a PDU session identifier (Session ID)) and an MBS session (including an MBS session ID). The PDU session is used for transmitting unicast service data, and the MBS session is used for transmitting multicast service data.
(2) The AMF forwards the PDU session ID and the MBS session ID to the SMF/MB-SMF.
   In case that, the SMF and the MB-SMF are disposed separately, the AMF transmits the PDU session ID to the SMF, and transmits the MBS session ID to the MB-SMF. Alternatively, the MBS session ID is also transmitted to the SMF and then forwarded by the SMF to the MB-SMF.
(3) The MB-SMF receives the MBS session ID, and transmits the MBS session ID to the MBSF, the UDR, or the PCF.
(4) The MBSF, the UDR, or the PCF transmits service requirement information and the like of a multicast service to the MB-SMF.
(5) The MB-SMF forwards the service requirement information and the like of the multicast service to the AMF.
(6) The AMF transmits first assistance information to the gNB based on a multicast service status such as the multicast service requirement information.
(7) When receiving the first assistance information, the gNB keeps the UE in an RRC-CONNECTED state even if the gNB detects that no unicast service data needs to be forwarded.
(8) When determining to keep the UE in the RRC-CONNECTED state, the gNB transmits indication information to the AMF, and stops transmitting a connection release message to the user terminal.

The indication information is used for indicating that the user terminal remains in the RRC-CONNECTED state or exits the RRC-CONNECTED state.

It should be noted that the communication indication process provided in this embodiment may include but is not limited to all or some of the foregoing (1) to (8). In addition, for detailed descriptions of (1) to (8), refer to the detailed descriptions in the foregoing method embodiments. Details are not described herein again.

FIG. 5 is a schematic diagram of a communication indication method 500 according to an example embodiment of this application. The method is performed by an access network device, and may be specifically performed by hardware and/or software installed in the access network device. The access network device may be but is not limited to a base station, for example, a gNB. The method 500 includes at least the following steps:
S510: In a case that no data is received and/or transmitted through a connection specific to a user terminal, determine an RRC state of the user terminal based on predetermined information.

The predetermined information includes at least one of the following (1) to (5):
(1) that the user terminal participates in a multicast service;
(2) a multicast service in which the user terminal participates;
(3) that data is received and/or transmitted for a multicast service in which the user terminal participates;
(4) that no data is received and/or transmitted for a multicast service in which the user terminal participates; and
(5) first assistance information transmitted by a first core network function, where the first assistance information is used for the access network device to control the RRC state of the user terminal.

For an implementation process of S510, refer to the related descriptions in the foregoing method embodiments. However, a difference from the foregoing method embodiments lies in that, in this embodiment, the access network device may further perform determining based on at least one of the foregoing (1) to (4) in addition to controlling the RRC state of the user terminal based on the received first assistance information that is transmitted by the first core network function. The information in the foregoing (1) to (4) may be autonomously obtained by the access network device, or may be transmitted by another network side device. This is not limited in this embodiment.

In this embodiment, in a case that no data is received and/or transmitted through the connection specific to the user terminal, the access network device may autonomously determine the RRC state of the user terminal based on the received first assistance information. This can resolve a problem that continuity of multicast service data cannot be ensured in a case that no unicast service data is available, thereby ensuring reliability of a multicast service and improving quality of wireless communication.

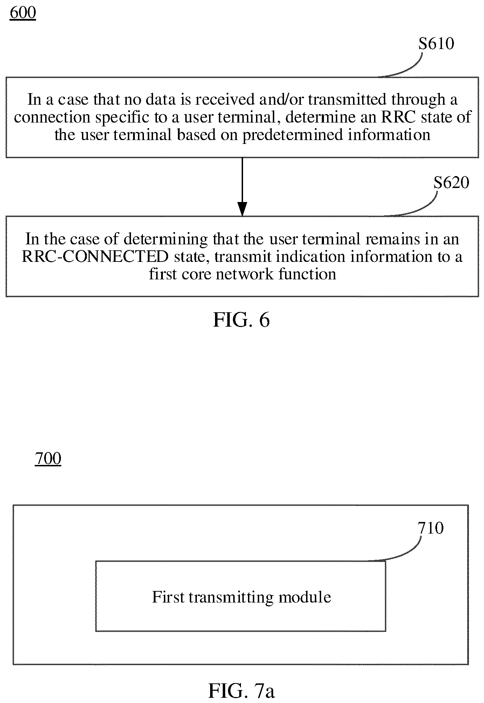

FIG. 6 is a schematic diagram of a communication indication method 600 according to an example embodiment of this application. The method is performed by an access network device, and may be specifically performed by hardware and/or software installed in the access network device. The access network device may be but is not limited to a base station, for example, a gNB. The method 600 includes at least the following steps:

S610: In a case that no data is received and/or transmitted through a connection specific to a user terminal, determine an RRC state of the user terminal based on predetermined information.

The predetermined information includes at least one of the following (1) to (5):
(1) that the user terminal participates in a multicast service;
(2) a multicast service in which the user terminal participates;
(3) that data is received and/or transmitted for a multicast service in which the user terminal participates;
(4) that no data is received and/or transmitted for a multicast service in which the user terminal participates; and
(5) first assistance information transmitted by a first core network function, where the first assistance information is used for the access network device to control the RRC state of the user terminal.

For an implementation process of S610, refer to the related descriptions in the foregoing method embodiments. In addition, in a possible implementation of this embodiment, the multicast service may be provided through a shared channel not specific to the user terminal.

In a possible implementation, the first assistance information includes any one of the following (1) to (10):
(1) an RRC-CONNECTED state;
(2) an RRC-IDLE state;
(3) an RRC-INACTIVE state;
(4) remaining in an RRC-CONNECTED state;
(5) prohibiting entering an RRC-IDLE state;
(6) prohibiting entering an RRC-INACTIVE state;
(7) not remaining in an RRC-CONNECTED state;
(8) entering an RRC-IDLE state;
(9) entering an RRC-INACTIVE state; and
(10) selecting a state corresponding to an RRC-CONNECTED state.

In another possible implementation, that the first assistance information is used for the access network device to control a radio resource control RRC state of the user terminal includes any one of the following (1) and (2):
(1) the first assistance information is used for indicating the access network device to control the RRC state of the user terminal; and
(2) the first assistance information is used for assisting determination of the RRC state of the user terminal by the access network device.

That the access network device determines the RRC state of the user terminal in (2) may include any one of the following (1) to (4):
(1) determining that the user terminal remains in an RRC-CONNECTED state;
(2) determining that the user terminal does not remain in an RRC-CONNECTED state;
(3) determining that the user terminal enters an RRC-IDLE state; and
(4) determining that the user terminal enters an RRC-INACTIVE state.

It should be noted that, in the case of determining that the user terminal remains in the RRC-CONNECTED state, the access network device stops transmitting a connection release message to the user terminal.

S620: In the case of determining that the user terminal remains in the RRC-CONNECTED state, transmit indication information to the first core network function, where the indication information is used for indicating that the user terminal remains in the RRC-CONNECTED state or exits the RRC-CONNECTED state.

It should be noted that, for the foregoing implementation processes, reference may be made to the related descriptions in the foregoing method embodiments. To avoid repetition, details are not described herein again.

It should be noted that the communication indication method provided in the embodiments of this application may be performed by a communication indication apparatus, or by a control module that is in the communication indication apparatus and that is configured to perform the communication indication method. In the embodiments of this application, the communication indication apparatus provided in the embodiments of this application is described by using an example in which the communication indication apparatus performs the communication indication method.

As shown in FIG. 7a, an example embodiment of this application further provides a communication indication apparatus 700. The communication indication apparatus includes: a first transmitting module 710, configured to transmit, based on a multicast service status corresponding to a user terminal, first assistance information to an access network device serving the user terminal, where the first assistance information is used for the access network device to control a radio resource control RRC state of the user terminal.

In a possible implementation of this embodiment, the multicast service status includes at least one of the following: a multicast service in which the user terminal participates; that the user terminal participates in a multicast service; a service requirement of a multicast service in which the user terminal participates; and a QoS requirement of a multicast service in which the user terminal participates.

In a possible implementation of this embodiment, the multicast service is provided through a shared channel not specific to the user terminal.

In a possible implementation of this embodiment, that the first assistance information is used for the access network device to control a radio resource control RRC state of the user terminal includes any one of the following: the first assistance information is used for indicating the access network device to control the RRC state of the user terminal; and the first assistance information is used for assisting determination of the RRC state of the user terminal by the access network device.

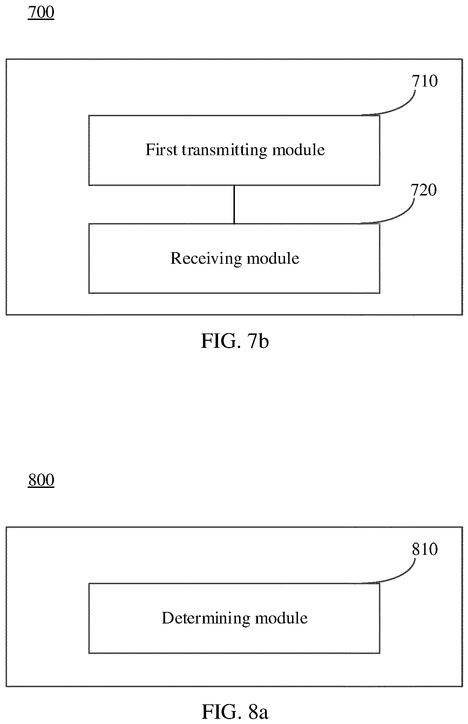

In a possible implementation of this embodiment, as shown in FIG. 7b, the apparatus 700 may further include: a receiving module 720, configured to receive service requirement information and/or QoS requirement information transmitted by a second core network function, where the service requirement information and/or the QoS requirement information correspond to the multicast service.

In a possible implementation of this embodiment, the service requirement information includes one of the following: service continuity; service continuity and packet loss being not allowed; service continuity and packet loss being allowed; packet loss being not allowed; and packet loss being allowed.

In a possible implementation of this embodiment, the first assistance information includes any one of the following: an RRC-CONNECTED state; an RRC-IDLE state; an RRC-INACTIVE state; remaining in an RRC-CONNECTED state; prohibiting entering an RRC-IDLE state; prohibiting entering an RRC-INACTIVE state; not remaining in an RRC-CONNECTED state; entering an RRC-IDLE state; entering an RRC-INACTIVE state; and selecting a state corresponding to an RRC-CONNECTED state.

In a possible implementation of this embodiment, the selecting a state corresponding to an RRC-CONNECTED state includes: requiring, by a first core network function, the access network device to determine whether the user terminal is to remain in or not remain in the RRC-CONNECTED state.

In a possible implementation of this embodiment, the first transmitting module is 710 further configured to transmit second assistance information to the access network device based on a unicast service status corresponding to the user terminal, where the unicast service is provided through a connection specific to the user terminal.

In a possible implementation of this embodiment, the unicast service status includes at least one of the following: a service requirement of the unicast service; and a QoS requirement of the unicast service.

In this embodiment of this application, the first core network function transmits, based on the multicast service status corresponding to the user terminal, the first assistance information to the access network device serving the user terminal, where the first assistance information is used for the access network device to control the radio resource control RRC state of the user terminal. This can resolve a problem that continuity of multicast service data cannot be ensured in a case that no unicast service data is available, thereby ensuring reliability and continuity of a multicast service and improving quality of wireless communication.

FIG. 8a is a block diagram of a communication indication apparatus 800 according to another example embodiment of this application. The apparatus 800 includes: a determining module 810, configured to: in a case that no data is received and/or transmitted through a connection specific to a user terminal, determine a radio resource control RRC state of the user terminal based on at least one of the following: that the user terminal participates in a multicast service; a multicast service in which the user terminal participates; that data is received and/or transmitted for a multicast service in which the user terminal participates; that no data is received and/or transmitted for a multicast service in which the user terminal participates; and first assistance information transmitted by a first core network function, where the first assistance information is used for an access network device to control the RRC state of the user terminal.

In a possible implementation of this embodiment, the multicast service is provided through a shared channel not specific to the user terminal.

In a possible implementation of this embodiment, that the first assistance information is used for the access network device to control a radio resource control RRC state of the user terminal includes any one of the following: the first assistance information is used for indicating the access network device to control the RRC state of the user terminal; and the first assistance information is used for assisting determination of the RRC state of the user terminal by the access network device.

In a possible implementation of this embodiment, the determining an RRC state of the user terminal includes any one of the following: determining that the user terminal remains in an RRC-CONNECTED state; determining that the user terminal does not remain in an RRC-CONNECTED state; determining that the user terminal enters an RRC-IDLE state; and determining that the user terminal enters an RRC-INACTIVE state.

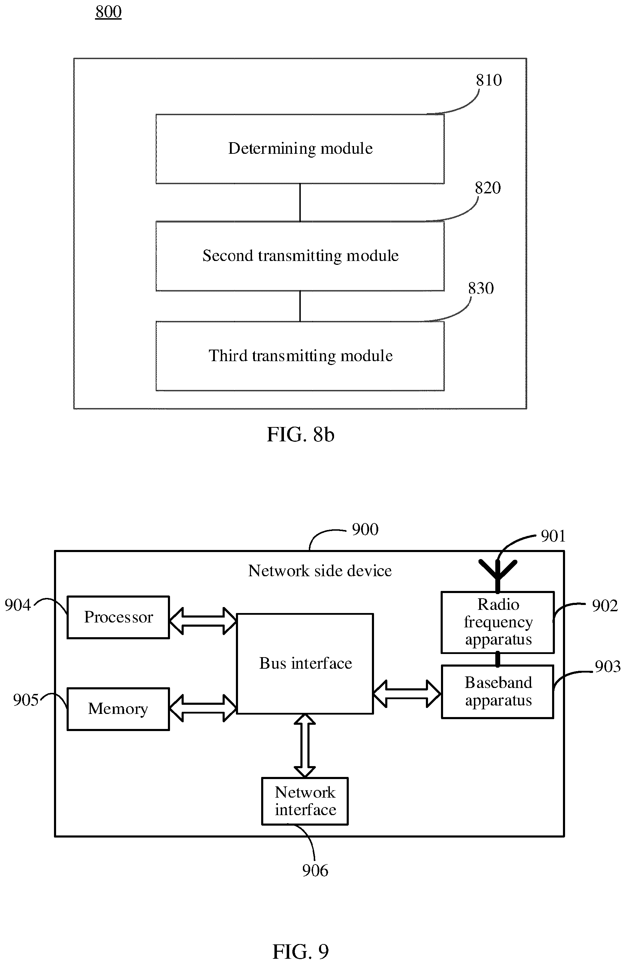

In a possible implementation of this embodiment, as shown in FIG. 8b, the apparatus 800 may further include: a second transmitting module 820, configured to: in the case of determining that the user terminal remains in the RRC-CONNECTED state, transmit indication information to the first core network function, where the indication information is used for indicating that the user terminal remains in the RRC-CONNECTED state or exits the RRC-CONNECTED state.

In a possible implementation of this embodiment, as shown in FIG. 8b, the apparatus 800 may further include: a third transmitting module 830, configured to: in the case of determining that the user terminal remains in the RRC-CONNECTED state, stop transmitting a connection release message to the user terminal.

In a possible implementation of this embodiment, the first assistance information includes any one of the following: an RRC-CONNECTED state; an RRC-IDLE state; an RRC-INACTIVE state; remaining in an RRC-CONNECTED state; prohibiting entering an RRC-IDLE state; prohibiting entering an RRC-INACTIVE state; not remaining in an RRC-CONNECTED state; entering an RRC-IDLE state; entering an RRC-INACTIVE state; and selecting a state corresponding to an RRC-CONNECTED state.

The communication indication apparatus 700 or 800 in the embodiments of this application may be an apparatus, or may be a component, an integrated circuit, or a chip in a network side device. This is not specifically limited in the embodiments of this application.

The communication indication apparatus provided in the embodiments of this application is capable of implementing the processes implemented in the method embodiments of FIG. 2 to FIG. 6, with the same technical effects achieved. To avoid repetition, details are not described herein again.

An example embodiment of this application further provides a network side device. As shown in FIG. 9, the network side device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and transmits the received information to the baseband apparatus 903 for processing. In a downlink direction, the baseband apparatus 903 processes to-be-transmitted information, and transmits the information to the radio frequency apparatus 902; and the radio frequency apparatus 902 processes the received information and then transmits the information by using the antenna 901.

The frequency band processing apparatus may be located in the baseband apparatus 903. The method performed by the network side device in the foregoing embodiments may be implemented by the baseband apparatus 903, and the baseband apparatus 903 includes a processor 904 and a memory 905.

The baseband apparatus 903 may include, for example, at least one baseband processing unit, where a plurality of chips are disposed on the baseband processing unit. As shown in FIG. 9, one of the chips is, for example, the processor 904, and connected to the memory 905, to invoke the program in the memory 905 to perform the operations of the network device shown in the foregoing method embodiment.

The baseband apparatus 903 may further include a network interface 906, configured to exchange information with the radio frequency apparatus 902. The interface is, for example, a common public radio interface (common public radio interface, CPRI for short).

Specifically, the network side device 900 in this embodiment of this application may further include instructions or a program stored in the memory 905 and executable on the processor 904, and the processor 904 invokes the instructions or program in the memory 905 to perform the method performed by the modules shown in FIG. 7a, FIG. 7b, FIG. 8a, or FIG. 8b, with the same technical effects achieved. To avoid repetition, details are not described herein again.

An embodiment of this application further provides a readable storage medium. The readable storage medium may be volatile or non-volatile. The readable storage medium stores a program or instructions. When the program or instructions are executed by a processor, the processes of the communication indication method embodiments are implemented, with the same technical effects achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to execute a program or instructions for a network side device, to implement the processes of the communication indication method embodiments, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program product. The computer program product includes a processor, a memory, and a program or instructions stored in the memory and executable on the processor. When the program or instructions are executed by the processor, the processes of the communication indication method embodiments are implemented, with the same technical effects achieved. To avoid repetition, details are not described herein again.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of this application essentially or the part contributing to the prior art may be implemented in a form of a software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific implementations. The foregoing specific implementations are merely illustrative rather than restrictive. As instructed by this application, a person of ordinary skill in the art may develop many other manners without departing from principles of this application and the protection scope of the claims, and all such manners fall within the protection scope of this application.

## Claims

1. A communication indication method, performed by a first core network function, wherein the method comprises:
transmitting, based on a multicast service status corresponding to a user terminal, first assistance information to an access network device serving the user terminal, wherein the first assistance information is used for the access network device to control a radio resource control RRC state of the user terminal.

2. The method according to claim 1, wherein the multicast service status comprises at least one of following:
a multicast service in which the user terminal participates;
that the user terminal participates in a multicast service;
a service requirement of a multicast service in which the user terminal participates; and
a quality of service QoS requirement of a multicast service in which the user terminal participates.

3. The method according to claim 1, wherein the multicast service is provided through a shared channel not specific to the user terminal.

4. The method according to claim 1, wherein that the first assistance information is used for the access network device to control a radio resource control RRC state of the user terminal comprises any one of following:
the first assistance information is used for indicating the access network device to control the RRC state of the user terminal; and
the first assistance information is used for assisting determination of the RRC state of the user terminal by the access network device.

5. The method according to any one of claims 1 to 4, wherein before the transmitting, based on a multicast service status corresponding to a user terminal, first assistance information to an access network device serving the user terminal, the method further comprises:
receiving service requirement information and/or QoS requirement information transmitted by a second core network function, wherein the service requirement information and/or the QoS requirement information correspond to the multicast service.

6. The method according to claim 5, wherein the service requirement information comprises one of following:
service continuity;
service continuity and packet loss being not allowed;
service continuity and packet loss being allowed;
packet loss being not allowed; and
packet loss being allowed.

7. The method according to any one of claims 1 to 4, wherein the first assistance information comprises any one of following:
an RRC-CONNECTED state;
an RRC-IDLE state;
an RRC-INACTIVE state;
remaining in an RRC-CONNECTED state;
prohibiting entering an RRC-IDLE state;
prohibiting entering an RRC-INACTIVE state;
not remaining in an RRC-CONNECTED state;
entering an RRC-IDLE state;
entering an RRC-INACTIVE state; and
selecting a state corresponding to an RRC-CONNECTED state.

8. The method according to claim 7, wherein the selecting a state corresponding to an RRC-CONNECTED state comprises:
requiring, by the first core network function, the access network device to determine whether the user terminal is to remain in or not remain in the RRC-CONNECTED state.

9. The method according to claim 1, wherein after the transmitting first assistance information to an access network device serving the user terminal, the method further comprises:
transmitting second assistance information to the access network device based on a unicast service status corresponding to the user terminal, wherein
the unicast service is provided through a connection specific to the user terminal.

10. The method according to claim 9, wherein the unicast service status comprises at least one of following:
a service requirement of the unicast service; and
a QoS requirement of the unicast service.

11. A communication indication method, performed by an access network device, wherein the method comprises:
in a case that no data is received and/or transmitted through a connection specific to a user terminal, determining a radio resource control RRC state of the user terminal based on at least one of following:
that the user terminal participates in a multicast service;
a multicast service in which the user terminal participates;
that data is received and/or transmitted for a multicast service in which the user terminal participates; and
that no data is received and/or transmitted for a multicast service in which the user terminal participates; and
first assistance information transmitted by a first core network function, wherein the first assistance information is used for the access network device to control the RRC state of the user terminal.

12. The method according to claim 11, wherein the multicast service is provided through a shared channel not specific to the user terminal.

13. The method according to claim 11, wherein that the first assistance information is used for the access network device to control a radio resource control RRC state of the user terminal comprises any one of following:
the first assistance information is used for indicating the access network device to control the RRC state of the user terminal; and
the first assistance information is used for assisting determination of the RRC state of the user terminal by the access network device.

14. The method according to claim 13, wherein the determining an RRC state of the user terminal comprises any one of following:
determining that the user terminal remains in an RRC-CONNECTED state;
determining that the user terminal does not remain in an RRC-CONNECTED state;
determining that the user terminal enters an RRC-IDLE state; and
determining that the user terminal enters an RRC-INACTIVE state.

15. The method according to claim 14, wherein the method further comprises:
in a case of determining that the user terminal remains in the RRC-CONNECTED state, transmitting indication information to the first core network function, wherein the indication information is used for indicating that the user terminal remains in the RRC-CONNECTED state or exits the RRC-CONNECTED state.

16. The method according to claim 14, wherein the method further comprises:
in a case of determining that the user terminal remains in the RRC-CONNECTED state, stopping transmitting a connection release message to the user terminal.

17. The method according to any one of claims 12 to 16, wherein the first assistance information comprises any one of following:
an RRC-CONNECTED state;
an RRC-IDLE state;
an RRC-INACTIVE state;
remaining in an RRC-CONNECTED state;
prohibiting entering an RRC-IDLE state;
prohibiting entering an RRC-INACTIVE state;
not remaining in an RRC-CONNECTED state;
entering an RRC-IDLE state;
entering an RRC-INACTIVE state; and
selecting a state corresponding to an RRC-CONNECTED state.

18. A communication indication apparatus, wherein the apparatus comprises:
a first transmitting module, configured to transmit, based on a multicast service status corresponding to a user terminal, first assistance information to an access network device serving the user terminal, wherein the first assistance information is used for the access network device to control a radio resource control RRC state of the user terminal.

19. The apparatus according to claim 18, wherein the multicast service status comprises at least one of following:
a multicast service in which the user terminal participates;
that the user terminal participates in a multicast service;
a service requirement of a multicast service in which the user terminal participates; and
a quality of service QoS requirement of a multicast service in which the user terminal participates.

20. The apparatus according to claim 18, wherein the multicast service is provided through a shared channel not specific to the user terminal.

21. The apparatus according to claim 18, wherein that the first assistance information is used for the access network device to control a radio resource control RRC state of the user terminal comprises any one of following:
the first assistance information is used for indicating the access network device to control the RRC state of the user terminal; and
the first assistance information is used for assisting determination of the RRC state of the user terminal by the access network device.

22. The apparatus according to any one of claims 18 to 21, wherein the apparatus further comprises:
a receiving module, configured to receive service requirement information and/or QoS requirement information transmitted by a second core network function, wherein the service requirement information and/or the QoS requirement information correspond to the multicast service.

23. The apparatus according to claim 22, wherein the service requirement information comprises one of following:
service continuity;
service continuity and packet loss being not allowed;
service continuity and packet loss being allowed;
packet loss being not allowed; and
packet loss being allowed.

24. The apparatus according to any one of claims 18 to 21, wherein the first assistance information comprises any one of following:
an RRC-CONNECTED state;
an RRC-IDLE state;
an RRC-INACTIVE state;
remaining in an RRC-CONNECTED state;
prohibiting entering an RRC-IDLE state;
prohibiting entering an RRC-INACTIVE state;
not remaining in an RRC-CONNECTED state;
entering an RRC-IDLE state;
entering an RRC-INACTIVE state; and
selecting a state corresponding to an RRC-CONNECTED state.

25. The apparatus according to claim 24, wherein the selecting a state corresponding to an RRC-CONNECTED state comprises:
requiring, by a first core network function, the access network device to determine whether the user terminal is to remain in or not remain in the RRC-CONNECTED state.

26. The apparatus according to claim 18, wherein the first transmitting module is further configured to transmit second assistance information to the access network device based on a unicast service status corresponding to the user terminal, wherein
the unicast service is provided through a connection specific to the user terminal.

27. The apparatus according to claim 26, wherein the unicast service status comprises at least one of following:
a service requirement of the unicast service; and
a QoS requirement of the unicast service.

28. A communication indication apparatus, wherein the apparatus comprises:
a determining module, configured to: in a case that no data is received and/or transmitted through a connection specific to a user terminal, determine a radio resource control RRC state of the user terminal based on at least one of following:
that the user terminal participates in a multicast service;
a multicast service in which the user terminal participates;
that data is received and/or transmitted for a multicast service in which the user terminal participates; and
that no data is received and/or transmitted for a multicast service in which the user terminal participates; and
first assistance information transmitted by a first core network function, wherein the first assistance information is used for an access network device to control the RRC state of the user terminal.

29. The apparatus according to claim 28, wherein the multicast service is provided through a shared channel not specific to the user terminal.

30. The apparatus according to claim 28, wherein that the first assistance information is used for the access network device to control a radio resource control RRC state of the user terminal comprises any one of following:
the first assistance information is used for indicating the access network device to control the RRC state of the user terminal; and
the first assistance information is used for assisting determination of the RRC state of the user terminal by the access network device.

31. The apparatus according to claim 30, wherein the determining an RRC state of the user terminal comprises any one of following:
determining that the user terminal remains in an RRC-CONNECTED state;
determining that the user terminal does not remain in an RRC-CONNECTED state;
determining that the user terminal enters an RRC-IDLE state; and
determining that the user terminal enters an RRC-INACTIVE state.

32. The apparatus according to claim 31, wherein the apparatus further comprises:
a second transmitting module, configured to: in a case of determining that the user terminal remains in the RRC-CONNECTED state, transmit indication information to the first core network function, wherein the indication information is used for indicating that the user terminal remains in the RRC-CONNECTED state or exits the RRC-CONNECTED state.

33. The apparatus according to claim 31, wherein the apparatus further comprises:
a third transmitting module, configured to: in a case of determining that the user terminal remains in the RRC-CONNECTED state, stop transmitting a connection release message to the user terminal.

34. The apparatus according to any one of claims 28 to 33, wherein the first assistance information comprises any one of following:
an RRC-CONNECTED state;
an RRC-IDLE state;
an RRC-INACTIVE state;
remaining in an RRC-CONNECTED state;
prohibiting entering an RRC-IDLE state;
prohibiting entering an RRC-INACTIVE state;
not remaining in an RRC-CONNECTED state;
entering an RRC-IDLE state;
entering an RRC-INACTIVE state; and
selecting a state corresponding to an RRC-CONNECTED state.

35. A network side device, comprising a processor, a memory, and a program or instructions stored in the memory and executable on the processor, wherein when the program or instructions are executed by the processor, steps of the communication indication method according to any one of claims 1 to 10 are implemented, or steps of the communication indication method according to any one of claims 11 to 17 are implemented.

36. A readable storage medium, wherein the readable storage medium stores a program or instructions, and when the program or instructions are executed by a processor, the communication indication method according to any one of claims 1 to 10 is implemented, or steps of the communication indication method according to any one of claims 11 to 17 are implemented.

37. A network side device, wherein the network side device is configured to perform steps of the communication indication method according to any one of claims 1 to 10, or implement steps of the communication indication method according to any one of claims 11 to 17.

38. A chip, wherein the chip comprises a processor and a communication interface, the communication interface is coupled to the processor, and the processor is configured to execute a program or instructions for a network side device, to implement steps of the communication indication method according to any one of claims 1 to 10, or implement steps of the communication indication method according to any one of claims 11 to 17.

39. A computer program product, wherein the computer program product is stored in a non-transitory storage medium, and when the computer program product is executed, steps of the communication indication method according to any one of claims 1 to 10 are implemented, or steps of the communication indication method according to any one of claims 11 to 17 are implemented.
